# FASCICULE DE BREVET EUROPEEN

(11) **EP 1 174 717 B1**
(45) Date de publication et mention de la délivrance du brevet: **17.05.2006**
(21) Numéro de dépôt: 01401695.0
(22) Date de dépôt: 26.06.2001
(51) Int. Cl.: G01N 35/04, B01F 11/00

(54) **Dispositif de traitement d'échantillons de produits sanguins.**
Vorrichtung zur Behandlung von Blutproben
Device for handling blood samples

(30) Priorité: 21.07.2000 FR 0009623
(43) Date de publication de la demande: 23.01.2002
(73) Titulaire: Horiba ABX S.A., 34134 Montpellier Cedex 4 (FR)
(72) Inventeur: Le Comte, Roger, 34470 Perols (FR); Champseix, Serge, 19170 Tarnac (FR); Champseix, Henri, 34980 Montferrier sur Lez (FR)
(74) Mandataire: Bezault, Jean

(56) Documents cités:
- EP-A- 0 275 119
- EP-A- 0 634 660
- DE-A- 19 504 748
- FR-A- 1 562 948
- FR-A- 2 692 358
- FR-A- 2 730 315
- US-A- 4 921 676
- US-A- 5 665 309
- PATENT ABSTRACTS OF JAPAN vol. 006, no. 139 (C-116), 28 juillet 1982 (1982-07-28) & JP 57 063122 A (FUJIREBIO INC;OTHERS: 01), 16 avril 1982 (1982-04-16)

## Description

L'invention se rapporte aux analyseurs hématologiques destinés à analyser automatiquement des échantillons de produits sanguins.

Elle concerne plus particulièrement un dispositif de traitement d'échantillons de produits sanguins contenus dans des tubes obturés par des bouchons et regroupés dans des cassettes, et comprenant des moyens d'agitation propres à agiter les tubes, ainsi que des moyens de prélèvement propres à prélever au moins un échantillon dans un tube préalablement agité.

De tels dispositifs sont conçus pour agiter le tube afin de mélanger les constituants du produit sanguin qu'il contient et pour prélever ensuite un échantillon dont la composition est homogène et représentative du produit sanguin à analyser.

On connaît en particulier, d'après US-A-3 231 244, un dispositif automatique de mélange de produits sanguins, qui comprend un tambour rotatif muni de logements propres à maintenir des tubes contenant de tels produits. Les tubes sont disposés radialement par rapport à l'axe de rotation du tambour, en sorte que leurs bouchons respectifs soient dirigés vers l'extérieur. En fait, il s'agit seulement d'un dispositif d'agitation qui présente l'inconvénient que les tubes doivent être chargés manuellement sur le tambour puis extraits manuellement du tambour, une fois l'agitation réalisée.

On connaît aussi, d'après EP-A-0 061 317, un dispositif d'agitation et de prélèvement d'échantillons de produits sanguins, dans lequel les tubes contenant les produits sont regroupés dans des cassettes, lesquelles sont disposées manuellement dans un tambour rotatif. Ce dernier a pour fonction d'assurer par rotation le mélange des produits sanguins et d'immobiliser une cassette en position sensiblement verticale pour que les tubes qu'elle contient soient immobilisés avec leurs bouchons vers le bas. Une station de prélèvement est prévue pour prélever un échantillon dans un tube dans une cassette après perçage du bouchon du tube. Après analyse, les cassettes sont extraites manuellement du tambour.

Le principal inconvénient de ce dispositif connu est qu'il ne peut pas faire tourner le tambour, et donc agiter l'ensemble des tubes, pendant l'opération de prélèvement proprement dite.

On connaît aussi, d'après FR-A-2 730 315, un dispositif d'agitation et de prélèvement d'échantillons de produits sanguins dans des tubes regroupés dans des cassettes. Ce dispositif connu comprend un support de cassette propre à maintenir et à agiter au moins une cassette chargée d'au moins un tube ainsi qu'au moins une station de prélèvement propre à percer le bouchon du tube pour prélever l'échantillon. Du fait que ce prélèvement s'effectue dans un tube, en dehors de la cassette, il n'est plus nécessaire de prévoir des moyens pour bloquer le support en rotation pendant le prélèvement.

Ce dispositif connu est d'une grande complexité mécanique, ce qui engendre un surcoût.

On connaît en outre, d'après FR-A-2 692 358, un dispositif de transfert, d'agitation et de prélèvement d'échantillons de produits sanguins qui comprend un chariot mobile propre à extraire une cassette garnie de tubes d'échantillons dans un réceptacle de stockage et à amener la cassette dans un chariot rotatif. Ce dernier assure le mélange des échantillons et s'immobilise pour autoriser le prélèvement des tubes de la cassette par une station de prélèvement.

Ce dispositif présente sensiblement les mêmes inconvénients que ceux mentionnés précédemment.

On connaît aussi d'après US-A-4 921 676 un dispositif de traitement de produits sanguins de type défini en introduction, dans lequel un tube de sang est extrait d'une cassette, puis agité et ensuite replacé dans le cassette. Le prélèvement du sang s'effectue dans un poste de prelèvement du sang qui est externe à la cassette par perçage du bouchon du tube dans une position éloignée de la cassette, le tube étant ensuite replacé dans la cassette après prélèvement. Il est donc nécessaire de prévoir un support apte à recevoir le tube pour le prélèvement et présentant une résistance mécanique suffisante pour supporter les efforts résultant du perçage du bouchon.

L'invention a notamment pour but de surmonter les inconvénients précités.

Elle vise en particulier à proposer un dispositif de traitement d'échantillons de produits sanguins contenus dans des tubes regroupés dans des cassettes, grâce auquel l'agitation des tubes s'effectue en dehors des cassettes, ce qui évite d'avoir à agiter les cassettes proprement dites.

L'invention vise aussi à procurer un tel dispositif de traitement qui permet d'agiter un tube en dehors de la cassette, et de prélever ensuite un échantillon de produits sanguins dans le tube préalablement replacé dans la cassette.

Elle vise également à procurer un dispositif du type précité, dans lequel les cassettes offrent différentes possibilités de chargement ou de déchargement des tubes.

En outre l'invention vise à procurer un tel dispositif qui peut être facilement intégré dans une chaîne de plusieurs appareils d'analyse de sang.

L'invention propose à cet effet un dispositif de traitement du type défini en introduction, lequel comprend des moyens de transfert propres à déplacer individuellement les cassettes suivant un trajet déterminé, et dans lequel les moyens d'agitation comprennent au moins un organe de préhension propre à saisir au moins un tube choisi dans une cassette immobilisée sur le trajet, éloigner ledit tube de la cassette, l'agiter et le replacer dans la cassette, ainsi qu'une tête mobile qui porte le ou les organes de préhension et qui est propre à être entraînée en translation ou en rotation par l'intermédiaire d'un mécanisme d'accouplement relié à un moteur à deux sens de rotation, et dans lequel les moyens de prélèvement comprennent au moins une aiguille propre à prélever une quantité donnée d'échantillon dans le tube préalablement agité et replacé dans la cassette.

Ainsi, le dispositif de l'invention réalise l'agitation des tubes après leur extraction de la cassette et le prélèvement des échantillons dans les tubes qui, une fois agités, ont été replacés dans la cassette.

Ceci évite par conséquent d'agiter l'ensemble de la cassette comme dans la plupart des dispositifs de la technique antérieure.

Il en résulte aussi l'avantage que les cassettes peuvent être déplacées sur un trajet choisi, en particulier un trajet linéaire favorisant ainsi l'intégration du dispositif de l'invention dans une chaîne d'appareils hématologiques.

En outre, du fait que le chargement et le déchargement des tubes s'effectuent dans une cassette, qui est déplacée par des moyens de transfert, ces opérations peuvent être effectuées de différentes manières, en particulier par le dessus et par le côté de la cassette.

Par ailleurs, du fait que les moyens d'agitation s'appliquent à un ou plusieurs tubes, et non pas à une cassette, il en résulte une diminution de l'encombrement du dispositif, ce qui contribue à son intégration dans une chaîne de plusieurs appareils.

Dans une forme de réalisation préférée, les moyens de transfert comprennent un chariot propre à être solidarisé à une cassette par l'intermédiaire d'un doigt escamotable et des moyens de déplacement propres à déplacer le chariot entre des positions définies le long du trajet.

Selon une autre caractéristique de l'invention, les tubes sont disposés verticalement dans la cassette et dans l'alignement du trajet, tandis que les moyens d'agitation sont propres à extraire latéralement au moins un tube de la cassette et à le replacer latéralement dans la cassette après agitation.

La cassette comprend avantageusement des clips élastiques en U qui autorisent l'extraction d'un tube et sa remise en place par un déplacement latéral parallèle à lui-même ou par un déplacement axial du tube dans l'axe de ce dernier.

Il en résulte l'avantage que les tubes peuvent être chargés ou déchargés soit sur le côté de la cassette, soit par le dessus de la cassette.

Selon une autre caractéristique de l'invention, le ou chaque organe de préhension est propre à être entraîné en rotation continue par un moteur, de manière à effectuer une agitation continue par retournement complet du tube.

Avantageusement, le mécanisme d'accouplement comprend une vis et un écrou et est propre à être entraîné en rotation par le moteur de manière sélective, soit dans un sens de vissage pour éloigner la tête mobile de la cassette, soit dans un sens de dévissage pour rapprocher la tête mobile de la cassette, la tête mobile étant alors bloquée en rotation dans une orientation choisie par des moyens de blocage placés dans une position de verrouillage.

On prévoit avantageusement que ces moyens de blocage sont propres à être placés en outre dans une position de déverrouillage lorsque le mécanisme d'accouplement est parvenu à une position de butée en fin de vissage, ce qui permet un mouvement de rotation de la tête mobile pour agiter le ou les tubes.

De préférence, le mouvement de rotation de la tête mobile est une rotation continue et complète dans le sens du vissage du mécanisme d'accouplement.

Selon une autre caractéristique de l'invention, le dispositif comprend un mécanisme d'ouverture et de fermeture de l'organe de préhension qui est propre à être actionné en translation par le mécanisme d'accouplement, une fois ce dernier parvenu à une position de butée en fin de dévissage, la tête mobile étant immobilisée en rotation par les moyens de blocage.

L'organe de préhension comprend avantageusement deux corps de pince dont chacun porte au moins une mâchoire et définit un chemin de came, ainsi qu'un moyen de rappel élastique reliant les deux corps de pince pour solliciter les mâchoires l'une vers l'autre, le mécanisme d'ouverture et de fermeture comprenant des doigts de came déplacés en translation par le mécanisme d'accouplement et coopérant respectivement avec les chemins de came.

Selon une autre caractéristique de l'invention, le dispositif comprend un moyen de chargement manuel, encore appelé poste d'urgence, qui est disposé à proximité des moyens de transfert pour recevoir au moins un tube et placer ce tube sur le trajet des moyens de transfert et des moyens de prélèvement, en dehors de la présence d'une cassette, en vue du prélèvement d'un échantillon par les moyens de prélèvement.

Ce moyen de chargement manuel comprend avantageusement une tête rotative et basculante ayant des positions indexées et comportant des logements propres à recevoir des tubes de dimensions différentes.

Selon encore une autre caractéristique de l'invention, les moyens de prélèvement comprennent un chariot supportant un perceur et l'aiguille de prélèvement, et ce chariot est déplaçable entre une position de prélèvement, en laquelle le perceur est propre à percer le bouchon du tube et l'aiguille de prélèvement à prélever une quantité totale d'échantillon, et au moins une position de distribution, en laquelle l'aiguille de prélèvement est propre à refouler ladite quantité totale d'échantillon, ou une fraction de celle-ci, dans un réceptacle, tel qu'un bac de réactif.

Avantageusement, le dispositif comprend en outre un poste de chargement des cassettes et un poste de déchargement des cassettes placés respectivement en amont et en aval des moyens de transfert.

Dans la description qui suit, faite seulement à titre d'exemple, on se réfère aux dessins annexés, sur lesquels :
- la figure 1 est une vue de dessus d'un dispositif de traitement selon l'invention ;
- les figures 2A et 2B sont des vues en perspective d'une cassette propre à être utilisée dans le dispositif de la figure 1 ;
- la figure 3 est une vue en perspective des moyens de transfert et du poste de chargement manuel ;
- la figure 4 est une vue en perspective des moyens d'agitation ;
- la figure 5 est une vue en perspective éclatée des moyens d'agitation de la figure 4 ;
- les figures 6A, 7A et 8A sont des vues de côté des moyens d'agitation dans différentes phases de fonctionnement ;
- les figures 6B, 7B et 8B sont des vues de dessus correspondant respectivement aux figures 6A, 7A et 8A ;
- la figure 9 est une vue partielle en perspective du dispositif de transfert montrant le poste de chargement manuel dans une position inclinée pour le chargement ;
- la figure 10 est une vue analogue à la figure 9 dans laquelle le poste de chargement est en position redressée ; et
- la figure 11 est une vue de dessus des moyens de prélèvement.

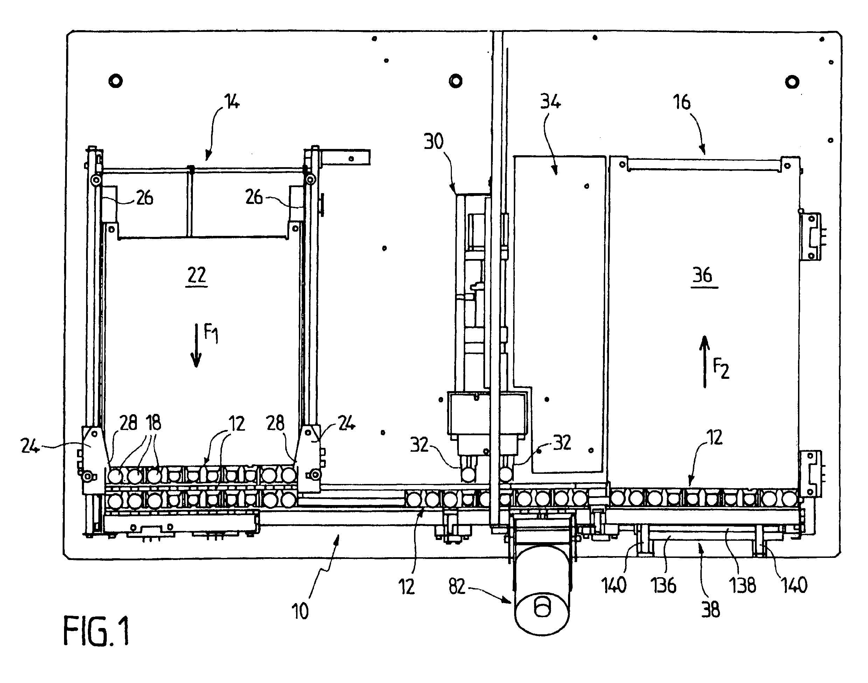

Le dispositif représenté dans son ensemble sur la figure 1 comprend des moyens de transfert 10 qui permettent de déplacer individuellement des cassettes 12 suivant un trajet déterminé, ici un trajet rectiligne, entre un poste de chargement 14 et un poste de déchargement 16. Ces postes 14 et 16 sont placés respectivement en amont et en aval des moyens de transfert 10.

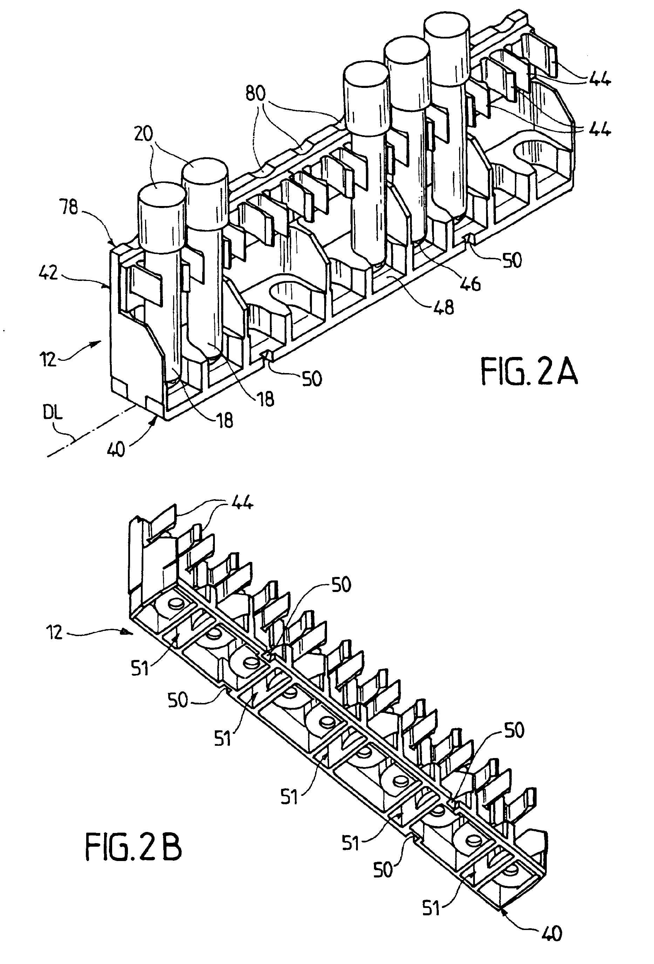

Les cassettes 12, qui seront décrites en détail plus loin, supportent chacune une pluralité de tubes 18, dans l'exemple dix tubes, qui renferment chacun un produit sanguin et sont fermés chacun par un bouchon 20 (figure 2).

Le poste de chargement 14 comprend un plateau de chargement 22 disposé horizontalement, et propre à recevoir une série de cassettes contenant des tubes dont les produits sont à analyser. Le poste de chargement 14 comprend des moyens d'avancement constitués ici par deux taquets poussoirs 24 déplaçables en synchronisme dans la direction de la flèche F1 pour acheminer les cassettes une à une vers les moyens de transfert 10. Ces taquets poussoirs 24 sont déplacés en synchronisme par des courroies sans fin 26, entraînées simultanément, et ils comprennent chacun un doigt 28 venant coopérer avec une extrémité de la cassette. Ces taquets poussoirs viennent ainsi agir sur la dernière cassette faisant partie de la pile à analyser.

Entre le poste de chargement 14 et le poste de déchargement 16 sont placés des moyens d'agitation désignés dans leur ensemble par la référence 30. Ces moyens d'agitation comprennent, dans l'exemple, deux organes de préhension 32 propres à saisir deux tubes choisis dans une cassette 12 immobilisée sur le trajet des moyens de transfert.

Comme on peut le voir sur la figure 1, une cassette 12 se trouve immobilisée sur le trajet entre le poste de chargement 14 et le poste de déchargement 16. Les moyens d'agitation 30, qui seront décrits en détail plus loin, permettent, dans l'exemple, de saisir deux tubes de la cassette, de les éloigner de la cassette, puis de les agiter et enfin de les replacer dans la cassette.

Entre les moyens d'agitation 30 et le poste de déchargement 16 sont disposés des moyens de prélèvement 34 qui sont représentés schématiquement sur la figure 1 et seront décrits en détail plus loin. Ces moyens de prélèvement sont conçus pour prélever un échantillon de produit sanguin dans un tube qui a été préalablement agité et replacé dans la cassette. Cet échantillon est ensuite analysé par des moyens qui seront décrits plus loin.

Une fois que tous les tubes de la cassette ont été agités et qu'ils ont fait l'objet d'un prélèvement d'échantillon, la cassette dans son ensemble est déplacée par les moyens de transfert 10 vers le poste de déchargement 16.

Ce dernier comprend un plateau de déchargement 36 qui s'étend à l'horizontale et qui est prévu pour recevoir les cassettes 12, lesquelles ont été acheminées à partir des moyens de transfert 10 grâce à des moyens d'éjection 38, qui seront décrits en détail plus loin.

On se réfère maintenant aux figures 2A et 2B pour décrire en détail une cassette 12 dans un mode de réalisation préféré de l'invention.

Cette cassette 12, en forme de râtelier, comprend une paroi de fond 40 de forme générale rectangulaire, à laquelle se rattache une paroi latérale verticale 42, également de forme rectangulaire, qui s'étend sur la même longueur que la paroi de fond 40.

La paroi latérale 42 porte, du côté intérieur, une pluralité de clips élastiques 44 en forme de U qui sont prévus pour maintenir individuellement un tube 18 dans une position verticale. On peut ainsi disposer dix tubes (dans cet exemple) qui sont dans l'alignement de la direction longitudinale DL de la cassette. Les tubes 18 comprennent chacun un fond 46 qui est reçu dans un logement 48 aménagé dans la paroi de fond 40 de la cassette.

Les tubes possèdent une ouverture qui, dans l'exemple est dirigée vers le haut et est obturée par un bouchon 20, lequel est susceptible d'être percé par un perceur (non représentée) faisant partie des moyens de prélèvement 34.

Comme on peut le constater sur la figure 2A, cette cassette a pour particularité de permettre un chargement et déchargement des tubes par le côté, c'est-à-dire dans une direction horizontale et perpendiculaire à la paroi latérale 42. Autrement dit, l'extraction d'un tube et sa remise en place peuvent être effectuées par un déplacement latéral, le tube restant parallèle à lui-même.

Egalement, les clips 44 autorisent un déplacement axial du tube dans l'axe de ce dernier, c'est-à-dire un déplacement vertical, perpendiculaire à la paroi de fond 40.

Conformément à l'invention, il est possible de réaliser différents types de cassettes en fonction des dimensions des tubes à recevoir, l'essentiel étant que le pas défini entre les tubes reste le même.

La paroi de fond 40 de la cassette est munie de quatre encoches 50 (figures 2A et 2B) propres à se positionner sur deux butées rétractables (non représentées), aménagées dans le plateau de chargement 22, afin que l'utilisateur ne puisse pas pousser manuellement la cassette dans les moyens de transfert.

En outre cinq logements 51 sont aménagés sous la cassette (figure 2B) pour coopérer avec les moyens de transfert, comme on le verra plus loin, et réaliser ainsi l'entraînement de la cassette suivant un trajet défini.

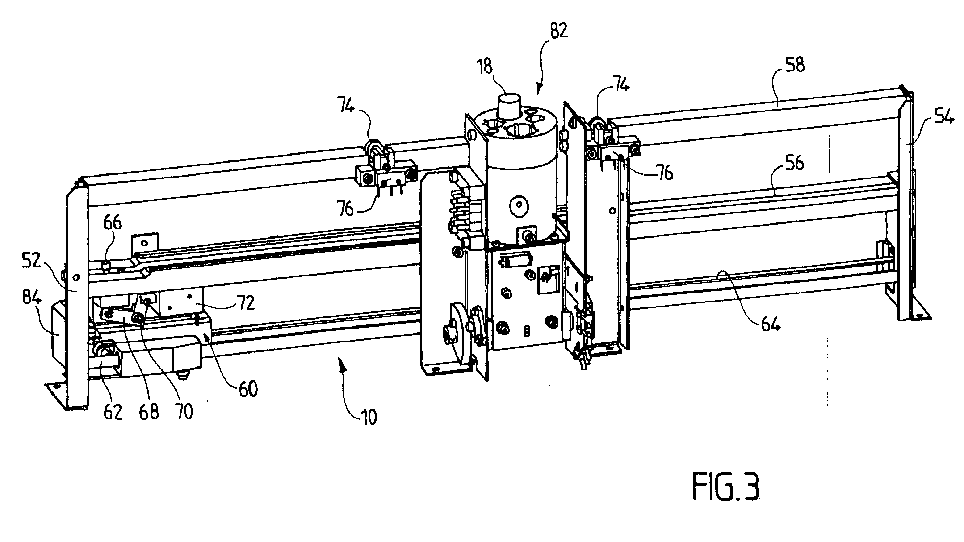

Les moyens de transfert 10, tels que représentés à la figure 3, comprennent deux supports d'extrémité 52 et 54 entre lesquels s'étendent un rail horizontal de guidage 56 sur lequel vient glisser la paroi de fond 40 d'une cassette et un autre rail horizontal de guidage 58, disposé au-dessus du rail de guidage 56, et contre lequel vient s'appliquer latéralement la paroi latérale 42 de la cassette. Les rails 56 et 58 sont chacun réalisés en deux parties. La cassette peut être ainsi guidée en translation avec sa paroi de fond 40 et sa paroi latérale 42 maintenues en appui respectivement sur les rails 56 et 58.

Le déplacement en translation d'une cassette est effectué à l'aide d'un chariot 60 déplaçable en translation le long d'un organe de guidage rectiligne 62, tel qu'une tige, qui s'étend parallèlement au rail 56. Les moyens de transfert 10 comprennent une courroie sans fin 64, qui est couplée au chariot 60 et qui est propre à déplacer ce chariot en translation, dans un sens ou dans un autre, entre des positions définies le long du trajet.

Le chariot 60 est muni d'un doigt escamotable 66 couplé à un levier 68, en forme de L, monté pivotant autour d'un axe 70 et actionné par un électro-aimant 72. Ce doigt escamotable est propre à être déplacé verticalement vers le haut pour venir s'engager dans l'un ou l'autre des logements 51 aménagés sous la cassette. Il peut aussi être déplacé verticalement vers le bas pour s'extraire de la cassette et permettre, en particulier, l'éjection de cette dernière sur le plateau de déchargement 36.

Par ailleurs, le rail de guidage 58 porte deux butées mobiles 74, dont l'une au moins est propre à être actionnée lors du déplacement de la cassette dans les moyens de transfert 10.

A cet effet, la paroi latérale 42 de la cassette comporte un bord crénelé 78 dans lequel sont aménagées une série d'encoches 80 présentant le même pas que les tubes.

Chacune des butées mobiles 74 est en outre propre à actionner un capteur 76. A son état de repos, chaque butée mobile 74 est maintenue en position basse par un ressort et le capteur 76 est au repos.

Lors du déplacement latéral de la cassette, la butée 74 subit un mouvement vertical ascendant provoqué par le bord crénelé 78 de la paroi 42 de la cassette 12, ce qui a pour effet d'actionner le capteur 76. La butée 74 reprend son état initial lorsqu'elle tombe dans une encoche 80, et le capteur n'est plus actionné.

La combinaison des informations en provenance des capteurs 76 actionnés par les butées est de nature à déterminer le positionnement d'au moins une cassette dans les moyens de transfert 10 et est aussi de nature à maintenir le positionnement de la cassette lors des opérations de prélèvement, d'agitation et de manipulation d'une seconde cassette par le chariot 60.

Comme on le voit sur les figures 1 et 3, à côté des moyens de transfert 10 est placé un moyen de chargement manuel 82, encore appelé poste d'urgence, qui est prévu pour recevoir au moins un tube 18 et le placer sur le trajet des moyens de transfert et des moyens de prélèvement, en dehors de la présence d'une cassette, en vue du prélèvement d'un échantillon par les moyens de prélèvement 34. Ce moyen de chargement sera décrit en détail plus loin.

La courroie sans fin 64 est entraînée en translation, dans un sens ou dans l'autre, par un moteur 84, en particulier du type pas à pas, ce qui permet de placer le chariot, et donc la cassette, en une position choisie le long du trajet.

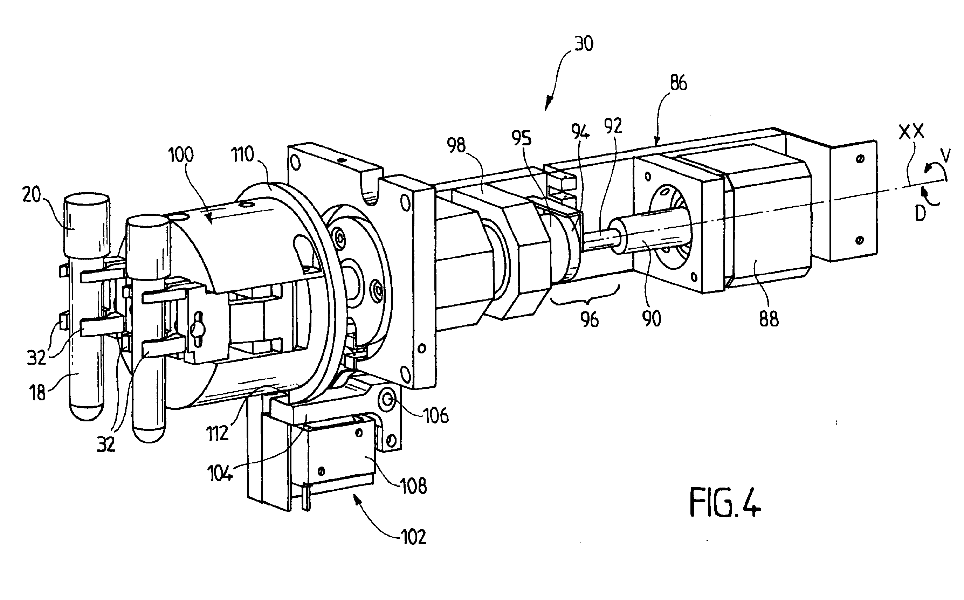

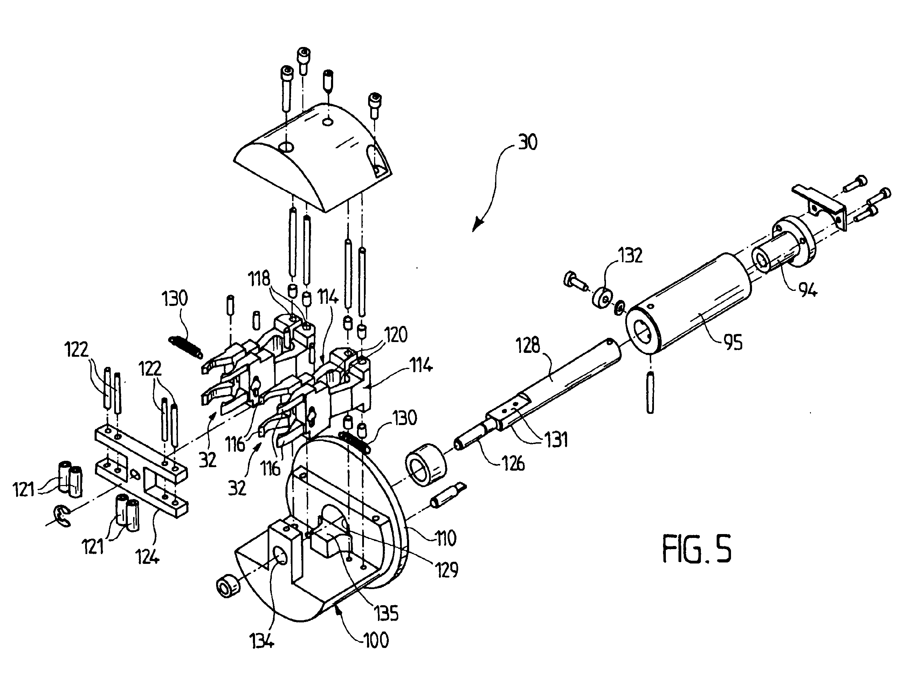

On se réfère maintenant conjointement aux figures 4 et 5 pour décrire les moyens d'agitation 30. Ces derniers comprennent un support 86 qui porte un moteur électrique 88, dr type pas à pas, présentant un arbre 90 qui s'étend suivant une direction axiale horizontale X-X qui est perpendiculaire à la direction de translation des cassettes sur les moyens de transfert 10, c'est-à-dire perpendiculairement au trajet défini par les moyens de transfert 10.

L'arbre 90 porte une vis 92 (axe fileté) coopérant avec un écrou 94 pour constituer ensemble un mécanisme 96 du type vis/écrou (figures 4 et 5). L'écrou 94 est fixé à un manchon 95 guidé dans une bride 98 et est relié à une tête mobile 100 qui porte les deux organes de préhension 32.

Le moteur électrique 88 peut être entraîné en rotation, dans un sens ou dans l'autre, dans des conditions définies, pour réaliser sélectivement soit le déplacement en translation de la tête mobile 100 dans la direction de l'axe X-X, soit son déplacement en rotation autour de cet axe.

Les moyens d'agitation 30 comprennent en outre un organe de butée 102 qui est constitué d'un levier 104 monté pivotant autour d'un axe 106 et actionné par l'intermédiaire d'un électro-aimant 108. Le levier 104 est propre à coopérer avec un disque 110 solidaire de la tête mobile 100 et muni d'une encoche 112. Cet organe de butée peut être placé sélectivement soit dans une position de verrouillage en laquelle la tête mobile 100 est immobilisée en translation, soit dans une position de déverrouillage, dans laquelle cette tête mobile est solidaire de l'écrou en translation et en rotation.

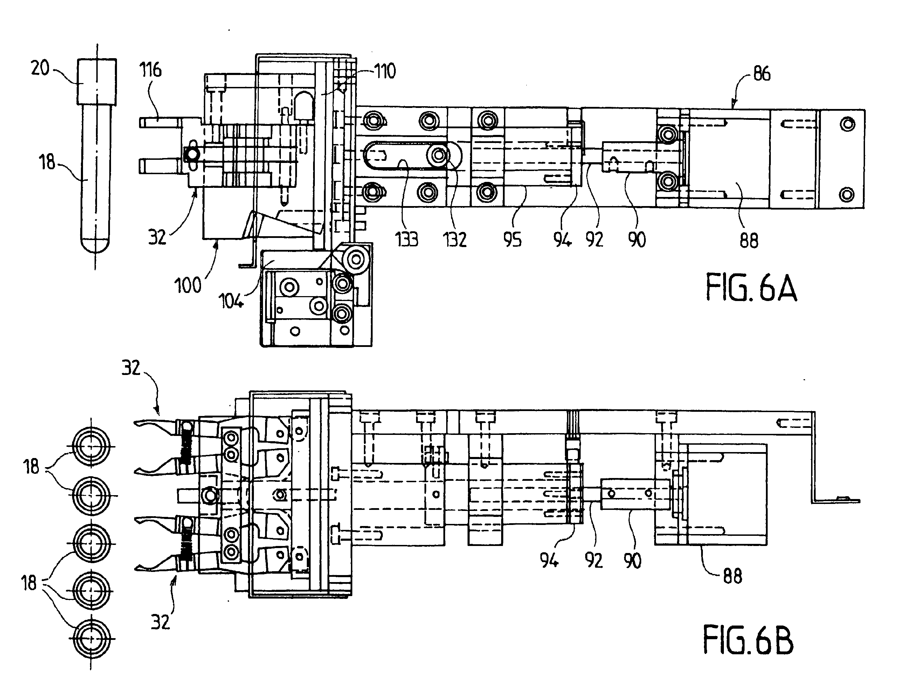

Le moteur 88 peut être entraîné en rotation dans un sens V correspondant au vissage, ce qui permet de rapprocher l'écrou 94 (et donc la tête mobile 100) du moteur 88, la tête mobile étant immobilisée en rotation par des moyens de blocage. Ces derniers sont composés d'un roulement 132 et d'une gorge 133 et seront décrits en détail plus loin en référence à la figure 6. Ce mouvement permet ainsi d'éloigner la tête mobile 100 d'une cassette disposée sur les moyens de transfert.

Le moteur 88 peut aussi être entraîné dans un sens D correspondant au dévissage qui éloigne l'écrou 94 (et donc la tête mobile 100) du moteur 88, cette tête mobile étant encore immobilisée en rotation par les moyens de blocage 132 et 133.

Ce mouvement permet au contraire de rapprocher la tête mobile 100 de la cassette disposée sur les moyens de transfert.

Par ailleurs, lorsque le moteur 88 est actionné dans le sens du vissage et que l'écrou 94 est venu en butée avec l'arbre 90 du moteur 88, et que les moyens de blocage 132 et 133 sont amenés dans une position de déverrouillage, la rotation du moteur dans le sens du vissage permet d'entraîner en rotation la tête mobile 100, alors que cette dernière est éloignée de la cassette, comme on le verra plus loin.

Comme on peut le voir plus particulièrement sur la figure 5, chacun des organes de préhension 32 comprend deux corps de pince 114 dont chacun porte deux mâchoires 116 et est monté pivotant autour d'un axe 118. Chaque corps de pince définit un chemin de came 120 de forme choisie qui est destiné à coopérer avec un doigt de came 121. Le dispositif comprend ici quatre doigts de came 121 portés par des axes 122 sur un support 124 en forme de H monté à l'extrémité 126 d'une tige 128, elle-même montée à l'extrémité du manchon 95.

Par ailleurs, les deux mâchoires d'une même pince sont sollicitées l'une vers l'autre par un ressort élastique de rappel 130, permettant de s'adapter aux différents diamètres de tubes utilisables. La tige 128 est propre à coulisser axialement et en translation dans une ouverture 129 du disque 110, tandis que son extrémité 126 est propre à coulisser dans une ouverture 134 de la tête mobile. La tige 128 comprend deux méplats 131 dont l'un vient en appui sur une embase 135 de la tête mobile 100, ce qui permet d'assurer ou non une solidarisation en rotation de la tige 128 et de la tête 100 en fonction de leur position axiale mutuelle.

Ainsi, lorsque la tige 128 est déplacée en translation axiale par rapport à la tête mobile 100, elle permet de réaliser l'ouverture et la fermeture des mâchoires respectives 116 des deux organes de préhension.

Le fonctionnement des moyens d'agitation sera maintenant décrit en référence aux figures 6 à 8. Dans la position des figures 6A et 6B, la tête mobile 100 est dans une position éloignée de la cassette et donc des tubes de cette dernière. Le mécanisme d'accouplement est près d'une position de butée de fin de vissage. Les moyens de blocage précités sont composés du roulement 132 qui est solidaire du manchon 95 et qui coopère avec la gorge 133 du support. Ces moyens réalisent un blocage en translation seule ou en rotation seule.

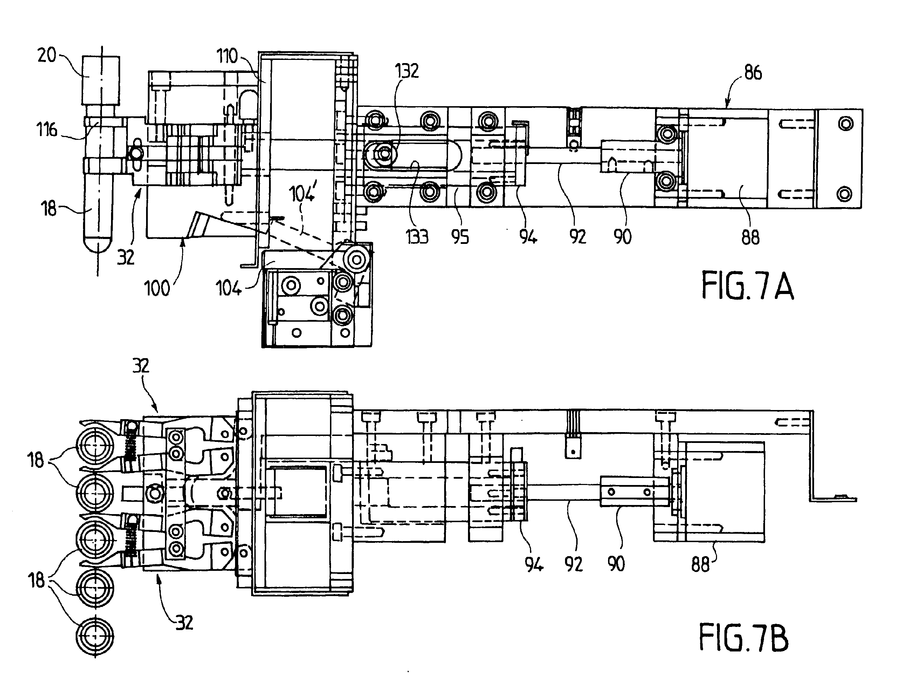

Si l'on actionne le moteur 88 dans le sens du dévissage, la tête mobile 100 se rapproche de la cassette et donc des tubes de cette dernière. La tête vient en butée contre une tôle avant (non représentée) qui interviendra ensuite lors de la remise en place du tube dans la cassette. La tête parvient ainsi à la position des figures 7A et 7B, dans laquelle les mâchoires 116 des organes de préhension sont ouvertes pour venir à chaque fois saisir un tube de la cassette. Ensuite, on actionne l'organe de butée 102 pour placer le levier 104 dans la position de verrouillage telle que représentée en pointillés (référence 104'). Ceci permet de bloquer la tête dans la direction axiale. On actionne ensuite le moteur 88 dans le sens du vissage, ce qui provoque d'abord le pivotement des organes de préhension et le rapprochement de leurs mâchoires respectives pour saisir à chaque fois un tube de la cassette.

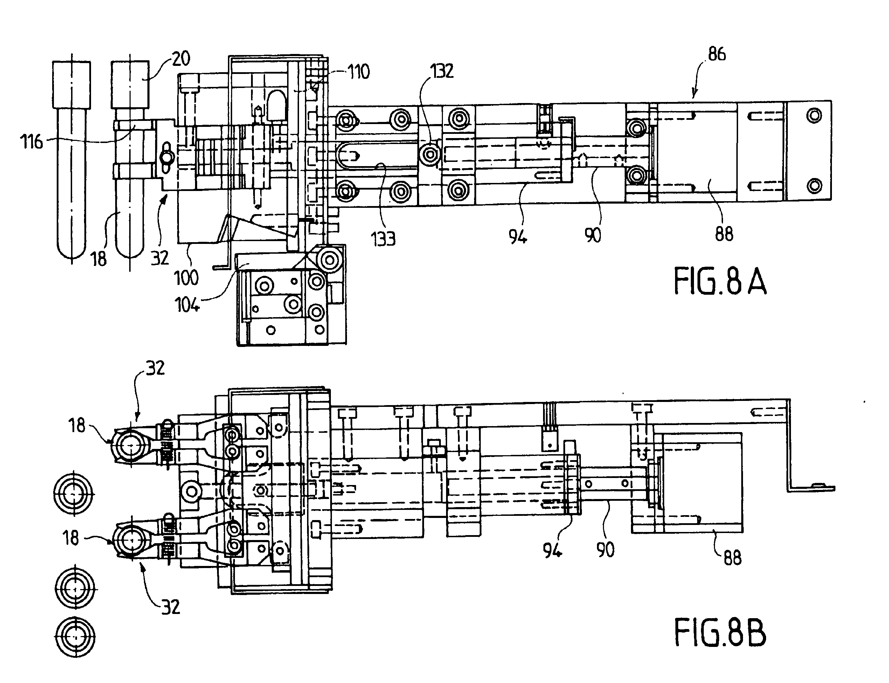

Ensuite, on ramène les moyens de blocage dans la position de déverrouillage, comme montré sur les figures 8A et 8B, et on poursuit la rotation du moteur 88 dans le sens du vissage ce qui permet d'éloigner la tête mobile de la cassette, les organes de préhension maintenant à chaque fois un tube. Pendant ce déplacement, la tête mobile reste immobilisée en rotation du fait que le roulement 132 reste engagé dans la gorge 133.

Lorsque l'on parvient en fin du mouvement de vissage, c'est-à-dire en butée entre l'écrou 94 et l'arbre 90, le roulement 132 s'échappe de la gorge 133, si bien que la tête mobile 100 n'est plus immobilisée en rotation.

On peut alors entraîner en rotation le moteur, de manière continue, dans le sens du vissage ce qui provoque la rotation de la tête mobile et par conséquent l'agitation des deux tubes qu'elle porte.

Ces deux tubes sont alors agités par un mouvement de rotation continue sur 360°, ce qui permet d'assurer une meilleure agitation que par un mouvement pendulaire.

Après agitation, les tubes sont remis en place dans la cassette.

Ainsi, grâce au moteur 88, au mécanisme d'accouplement 96, à l'organe de butée 102 et aux moyens de blocage constitués par le roulement 132 et la gorge 133, on peut réaliser différents mouvements, à savoir mouvement en translation de la tête mobile 100 dans la direction axiale, dans un sens ou dans l'autre, et mouvement de rotation de cette tête mobile pour assurer l'agitation des tubes.

On remarquera que, dans l'exemple de réalisation, les moyens d'agitation viennent extraire à chaque fois deux tubes de la cassette pour les agiter et les replacer ensuite dans la cassette.

Comme cette cassette possède en tout dix tubes, il suffit au minimum de cinq opérations pour réaliser l'agitation de l'ensemble des dix tubes. On préfère cependant agiter chaque tube deux fois : d'abord le tube N°1 tout seul, puis le tube N°2 tout seul, puis les tubes N°s 1 et 3 ensemble, puis les tubes N°s 2 et 4 ensemble, et ainsi de suite.

A chaque fois, la cassette est avancée, sur les moyens de transfert, selon une distance choisie qui est définie par le moteur pas à pas 84 qui actionne le déplacement du chariot 60.

Les tubes, préalablement agités, sont ensuite amenés, un à un, en regard des moyens de prélèvement 34, qui seront décrits plus loin.

Après prélèvement dans les dix tubes de la cassette, cette dernière est amenée en regard du poste déchargement 16 où le chariot actionne mécaniquement les moyens d'éjection 38. Ces derniers comprennent un organe basculant 136 (figure 1) monté pivotant autour d'un axe qui s'étend parallèlement à la direction des moyens de transfert et qui possède une rampe 138 contre laquelle vient coopérer le chariot 60 pour réaliser un mouvement de pivotement de l'organe basculant. Ce dernier est muni de deux poussoirs 140 qui viennent appuyer contre la cassette pour la déplacer sur le plateau 36 dans la direction de la flèche F2. Les cassettes se trouvent ainsi, après analyse, reçues en pile sur le plateau 36 des moyens de déchargement.

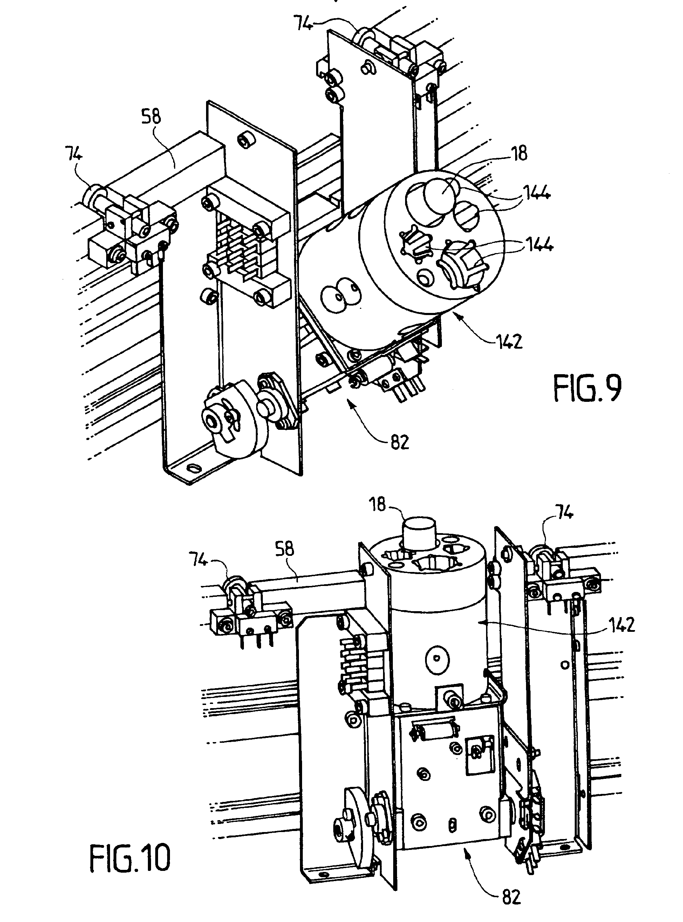

On se réfère maintenant aux figures 9 et 10 pour décrire plus en détail le moyen de chargement manuel 82, encore appelé poste d'urgence.

Ce dernier est disposé à proximité des moyens de transfert 10 et est propre à recevoir au moins un tube 18, en dehors de la présence d'une cassette sur les moyens de transfert. Il comprend une tête 142 montée rotative et basculante et susceptible d'être placée dans différentes positions indexées. Cette tête comporte des logements 144 adaptés pour recevoir des tubes des dimensions différentes.

La tête 142 peut être placée dans une position inclinée, comme montré à la figure 9, autorisant le chargement d'au moins un tube dans un logement approprié. Ensuite, cette tête est basculée dans une position verticale, comme montré sur la figure 10, en laquelle le tube 18 est vertical en vue d'une opération de prélèvement d'un échantillon de produit sanguin. Comme on peut le voir sur les figures 9 et 10, la tête peut être amenée en rotation dans différentes positions indexées en laquelle le logement qui porte le tube à analyser se trouve en regard des moyens de prélèvement 34.

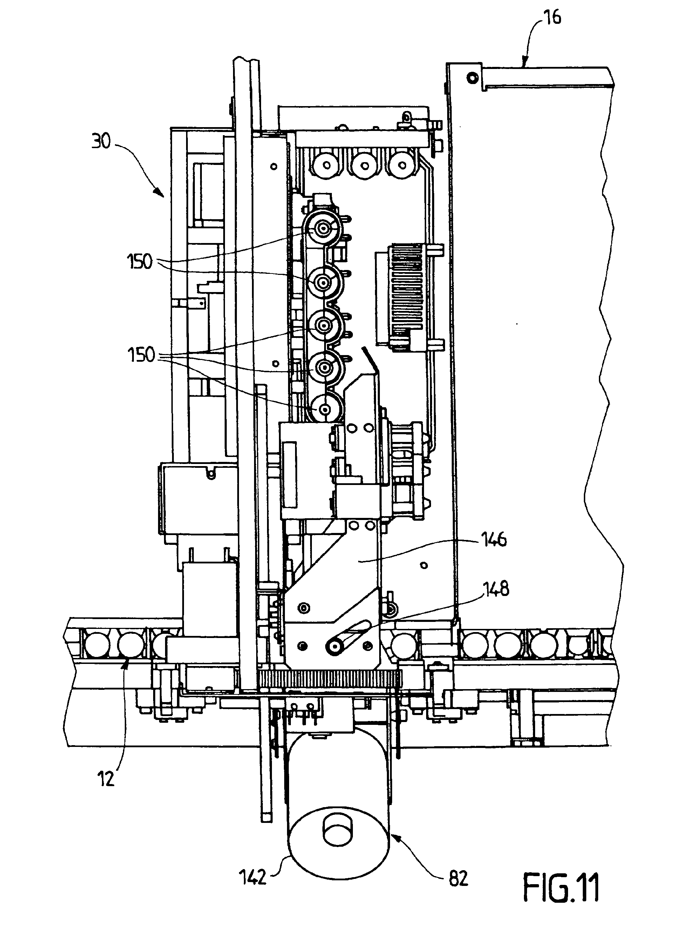

On se réfère maintenant à la figure 11 pour décrire la structure générale des moyens de prélèvement. Ces derniers comprennent un chariot 146 déplaçable en translation horizontale suivant une direction orthogonale à celle des moyens de transfert.

Ce chariot 146 porte un perceur et une aiguille de prélèvement associée (désignés dans leur ensemble par la référence 148) et peut être placé au-dessus d'un tube dont le bouchon est à percer. Le perceur et l'aiguille sont alors déplacés verticalement de haut en bas pour réaliser le perçage du bouchon du tube et l'aspiration d'une quantité totale d'échantillon. A cet effet, l'aiguille de prélèvement est reliée à une pompe d'aspiration appropriée (non représentée). Ensuite, l'aiguille et le perceur sont relevés vers le haut et le chariot est déplacé de manière à s'éloigner pour venir distribuer des fractions de l'échantillon prélevé dans différents bacs 150 où une fraction de l'échantillon est à chaque fois mélangée avec un réactif approprié pour des fins d'analyse.

A titre d'exemple, les moyens de prélèvement peuvent être réalisés conformément aux enseignements du document EP-A-0 634 660. En particulier, ces moyens de prélèvement comprennent avantageusement des moyens de nettoyage pour nettoyer l'aiguille avant et après chaque opération de prélèvement.

On réalise ainsi un dispositif peu encombrant qui peut s'intégrer facilement dans une chaîne d'appareils hématologiques, d'autant que les cassettes sont déplacées de manière linéaire par les moyens de transfert entre un poste de chargement et un poste de déchargement.

Du fait que les tubes sont agités en dehors des cassettes, les moyens d'agitation prévus à cet effet sont moins encombrants et peuvent s'intégrer plus facilement dans le dispositif de l'invention.

Le dispositif de l'invention offre en outre l'avantage que les tubes peuvent être chargés ou déchargés dans les cassettes soit latéralement soit verticalement, en particulier par le haut.

Enfin, du fait que le prélèvement s'effectue dans les tubes préalablement agités et remis en place dans la cassette, il n'est pas nécessaire de prévoir des moyens permettant de maintenir les tubes en position pour le prélèvement.

Bien entendu, l'invention n'est pas limitée à la forme de réalisation décrite précédemment à titre d'exemple et s'étend à d'autres variantes.

L'invention trouve une application particulière aux analyseurs hématologiques, tels que ceux utilisés dans les laboratoires aux fins d'analyse.

## Revendications

1. Dispositif de traitement d'échantillons de produits sanguins contenus dans des tubes obturés par des bouchons et regroupés dans des cassettes, du type comprenant des moyens d'agitation propres à agiter les tubes et des moyens de prélèvement propres à prélever au moins un échantillon dans un tube préalablement agité et des moyens de transfert (10) propres à déplacer individuellement les cassettes (12) suivant un trajet déterminé, les moyens d'agitation (30) comprenant au moins un organe de préhension (32) propre à saisir au moins un tube choisi (18) dans une cassette (12) immobilisée sur le trajet, éloigner ledit tube de la cassette, l'agiter et le replacer dans la cassette, ainsi qu'une tête mobile (100) qui porte le(s) organe(s) de préhension (32) , le dispositif étant **caractérisé en ce que** ladite tête mobile est propre à être entraînée en translation ou en rotation par l'intermédiaire d'un mécanisme d'accouplement (96) relié à un moteur (88) à deux sens de rotation, et **en ce que** les moyens de prélèvement (34) comprennent au moins une aiguille (148) propre à prélever une quantité donnée d'échantillon dans le tube, qui une fois agité, a été replacé dans la cassette.

2. Dispositif selon la revendication 1, **caractérisé en ce que** les moyens de transfert (10) comprennent un chariot (60) propre à être solidarisé à une cassette (12) par l'intermédiaire d'un doigt escamotable (66), et des moyens de déplacement (64, 84) propres à déplacer le chariot entre des positions définies le long du trajet.

3. Dispositif selon l'une des revendications 1 et 2, **caractérisé en ce que** les tubes (18) sont disposés verticalement dans la cassette (12) et dans l'alignement du trajet, et **en ce que** les moyens d'agitation (30) sont propres à extraire latéralement au moins un tube (18) de la cassette et à le replacer latéralement dans la cassette après agitation.

4. Dispositif selon l'une des revendications 1 à 3, **caractérisé en ce que** la cassette (12) comprend des clips élastiques en U (44) autorisant l'extraction d'un tube et sa remise en place par un déplacement latéral parallèle à lui-même ou par un déplacement axial du tube dans l'axe de ce dernier.

5. Dispositif selon l'une des revendications 1 à 4, **caractérisé en ce que** le ou chaque organe de préhension (32) est propre à être entraîné en rotation continue par un moteur (88), de manière à effectuer une agitation continue par retournement complet du tube.

6. Dispositif selon l'une des revendications 1 à 5, **caractérisé en ce que** le mécanisme d'accouplement (96) comprend une vis (92) et un écrou (94) et est propre à être entraîné en rotation par le moteur (88), sélectivement dans un sens de vissage pour éloigner la tête mobile (100) de la cassette (12) ou un sens de dévissage pour rapprocher la tête mobile (100) de la cassette (12), la tête mobile étant bloquée en rotation dans une orientation choisie par des moyens de blocage (132, 133) placés dans une position de verrouillage.

7. Dispositif selon la revendication 6, **caractérisé en ce que** les moyens de blocage (132, 133) sont propres à être placés dans une position de déverrouillage lorsque le mécanisme d'accouplement (96) est parvenu à une position de butée en fin de vissage, ce qui permet un mouvement de rotation de la tête mobile (100) pour agiter le(s) tube(s).

8. Dispositif selon l'une des revendications 1 à 7, **caractérisé en ce que** le mouvement de rotation de la tête mobile (100) est une rotation continue et complète dans le sens du vissage du mécanisme d'accouplement (96).

9. Dispositif selon l'une des revendications 1 à 8, **caractérisé en ce qu'**il comprend un mécanisme d'ouverture et de fermeture de l'organe de préhension (32) qui est propre à être actionné en translation par le mécanisme d'accouplement (96) une fois ce dernier parvenu à une position de butée en fin de dévissage, la tête mobile (100) étant immobilisée en rotation par les moyens de blocage (132, 133).

10. Dispositif selon la revendication 9, **caractérisé en ce que** l'organe de préhension (32) comprend deux corps de pince (114) dont chacun porte au moins une mâchoire (116) et définit un chemin de came (120), ainsi qu'un moyen de rappel élastique (130) reliant les deux corps de pince pour solliciter les mâchoires l'une vers l'autre, et **en ce que** le mécanisme d'ouverture et de fermeture comprend des doigts de came (122) déplacés en translation par le mécanisme d'accouplement (96) et coopérant respectivement avec les chemins de came (120)

11. Dispositif selon l'une des revendications 1 à 10, **caractérisé en ce qu'**il comprend un moyen de chargement manuel (82) disposé à proximité des moyens de transfert (10) pour recevoir au moins un tube (18) et placer ledit tube sur le trajet des moyens de transfert et des moyens de prélèvement, en dehors de la présence d'un cassette, en vue du prélèvement d'un échantillon par les moyens de prélèvement (34), le moyen de chargement manuel (82) comprenant une tête rotative et basculante (142) ayant des positions indexées et comportant des logements (144) propres à recevoir des tubes de dimensions différentes.

12. Dispositif selon l'une des revendications 1 à 11, **caractérisé en ce que** les moyens de prélèvement (34) comprennent un chariot (146) supportant le perceur et l'aiguille de prélèvement (148), et **en ce que** le chariot est déplaçable entre une position de prélèvement, en laquelle le perceur est propre à percer le bouchon du tube et l'aiguille de prélèvement à prélever une quantité totale d'échantillon, et au moins une position de distribution, en laquelle l'aiguille de prélèvement est propre à refouler ladite quantité totale d'échantillon, ou une fraction de celle-ci, dans un réceptacle, tel qu'un bac de réactif.

13. Dispositif selon l'une des revendications 1 à 12, **caractérisé en ce qu'**il comprend en outre un poste de chargement (14) des cassettes et un poste de déchargement (16) des cassettes, placés respectivement en amont et en aval des moyens de transfert (10).

## Claims

1. Device for treating samples of blood products contained in tubes sealed with bungs and gathered together in cassettes, of the type having shaking means capable of shaking the tubes, means of sampling capable of removing at least one sample from a previously shaken tube, and transfer means (10) capable of moving the cassettes (12) individually along a specified path, the shaking means (30) comprising at least one grasping element (32) capable of grasping at least one selected tube (18) from a cassette (12) stopped on the path, removing the said tube from the cassette, shaking the same and replacing the same in the cassette, as well as a mobile head (100) which carries the grasping element(s) (32), the device being **characterised in that** the mobile head is capable of being driven in translation or rotation via a coupling mechanism (96) connected to a motor (88) with two directions of rotation, and **in that** the sampling means (34) comprise at least one needle (148) capable of extracting a given quantity of the sample from the tube, which once shaken has been replaced in the cassette.

2. Device according to claim 1, **characterised in that** the transfer means (10) comprise a carriage (60) capable of being fixed to a cassette (12) via a retractable finger (66), and displacement means (64, 84) capable of moving the carriage between specified positions along the path.

3. Device according to either of claims 1 or 2, **characterised in that** the tubes (18) are disposed vertically in the cassette (12) and in alignment with the path, and **in that** the shaking means (30) are capable of extracting laterally at least one tube (18) from the cassette and of replacing the same laterally in the cassette after shaking.

4. Device according to one of claims 1 to 3, **characterised in that** the cassette (12) comprises resilient U-shaped clips (44) allowing a tube to be removed and replaced by lateral displacement parallel to itself or by axial displacement of the tube along the axis of the same.

5. Device according to one of claims 1 to 4, **characterised in that** the or each grasping element (32) is capable of being driven in continuous rotation by a motor (88), so as to effect continuous shaking by complete inversion of the tube.

6. Device according to one of claims 1 to 5, **characterised in that** the coupling mechanism (96) comprises a screw (92) and a nut (94) and is capable of being driven in rotation by the motor (88) selectively in a direction of screwing up in order to move the mobile head (100) away from the cassette (12) or in a direction of unscrewing in order to bring the mobile head (100) closer to the cassette (12), the mobile head being locked in rotation in a selected orientation by locking means (132, 133) placed in a bolting position.

7. Device according to claim 6, **characterised in that** the locking means (132, 133) are capable of being placed in a position of unbolting when the coupling mechanism (96) has reached a stop position at the end of screwing, which allows the mobile head (100) to effect a rotary motion in order to shake the tube(s).

8. Device according to one of claims 1 to 7, **characterised in that** the rotary motion of the mobile head (100) is a continuous, full rotation in the direction of screwing up of the coupling mechanism (96).

9. Device according to one of claims 1 to 8, **characterised in that** it comprises an opening and closing mechanism of the grasping element (32), which is capable of being actuated in translation by the coupling mechanism (96) once the latter has reached a stop position at the end of unscrewing, the mobile head (100) being made non-rotatable by the locking means (132, 133).

10. Device according to claim 9, **characterised in that** the grasping element (32) comprises two pincer bodies (114), each of which carries at least one jaw (116) and defines a cam path (120), as well as a spring-back means (130) connecting the two pincer bodies in order to bias the jaws one towards the other, and **in that** the opening and closing mechanism comprises cam fingers (122) which are moved in translation by the coupling mechanism (96) and cooperate respectively with the cam paths (120).

11. Device according to one of claims 1 to 10, **characterised in that** it comprises a manual loading means (82) disposed close to the transfer means (10) in order to receive at least one tube (18) and to place the said tube in the path of the transfer means and of the sampling means, without the presence of a cassette, with a view to taking a sample by sampling means (34), the manual loading means (82) comprising a rotary and rocking head (142) having indexed positions and comprising recesses (144) capable of receiving tubes of different dimensions.

12. Device according to one of claims 1 to 11, **characterised in that** the sampling means (34) comprise a carriage (146) supporting the piercing element and the sampling needle (148), and **in that** the carriage is displaceable between a sampling position, in which the piercing element is capable of piercing the bung of the tube and the sampling needle of taking a total sample quantity, and at least one distribution means, in which the sampling needle is capable of injecting the total sample quantity or a fraction thereof into a receptacle such as vessel of reagent.

13. Device according to one of claims 1 to 12, **characterised in that** it further comprises a bay (14) for loading the cassettes and a bay (16) for unloading the cassettes, placed respectively upstream and downstream of the transfer means (10).

## Patentansprüche

1. Vorrichtung zur Behandlung von Blutproben enthalten in Rohren, die durch Stopfen verschlossen und in Kassetten gruppiert sind, vom Typ mit einer Bewegungseinrichtung, die in der Lage ist, die Rohre heftig zu bewegen bzw. zu schütteln, und mit einer Entnahmeeinrichtung, die in der Lage ist, wenigstens eine Probe in einem vorher bewegten Rohr zu entnehmen und mit einer Übertragungseinrichtung (10), die in der Lage ist, einzeln die Kassetten (12) entlang einer vorbestimmten Bahn zu bewegen, wobei die Bewegungseinrichtung (30) wenigstens ein Aufgreiforgan (32), das in der Lage ist, wenigstens ein gewähltes Rohr (18) in einer Kassette (12), die auf der Bahn angehalten wurde, herauszunehmen, das Rohr von der Kassette zu entfernen, es zu schütteln und es in die Kassette zurückzusetzen, sowie einen beweglichen Kopf (100) aufweist, der das(die) Aufgreiforgan(e) (32) trägt, wobei die Vorrichtung **dadurch gekennzeichnet ist, dass** der bewegliche Kopf in der Lage ist, in Längsrichtung oder in Drehrichtung mittels eines Kupplungsmechanismus (96) angetrieben zu werden, der mit einem Motor (88) mit zwei Drehrichtungen verbunden ist, und dass die Entnahmeeinrichtung (34) wenigstens eine Nadel (148) aufweist, die in der Lage ist, eine vorgegebene Probenmenge aus dem Rohr zu entnehmen, das, nachdem es geschüttelt wurde, in die Kassette zurückgesetzt wurde.

2. Vorrichtung nach Anspruch 1, **dadurch gekennzeichnet, dass** die Übertragungseinrichtung (10) einen Schlitten (60), der in der Lage ist, mit einer Kassette (12) mittels eines ausfahrbaren Fingers (66) verbunden zu werden, und eine Bewegungseinrichtung (64, 84) aufweist, die in der Lage ist, den Schlitten zwischen definierten Positionen entlang der Bahn zu bewegen.

3. Vorrichtung nach Anspruch 1 oder 2, **dadurch gekennzeichnet, dass** die Rohre (18) vertikal in der Kassette (12) und in Ausrichtung mit der Bahn angeordnet sind, und dass die Bewegungseinrichtung (30) in der Lage ist, seitlich wenigstens ein Rohr (18) der Kassette herauszunehmen und es seitlich in die Kassette nach Schütteln zurückzusetzen.

4. Vorrichtung nach einem der Ansprüche 1 bis 3, **dadurch gekennzeichnet, dass** die Kassette (12) elastische Klammern in U-Form (44) aufweist, die das Herausnehmen eines Rohres und sein Zurücksetzen durch eine seitliche Bewegung, parallel zu ihm selbst oder durch eine Axialbewegung des Rohres in der Achse des Letzteren ermöglichen.

5. Vorrichtung nach einem der Ansprüche 1 bis 4, **dadurch gekennzeichnet, dass** das oder jedes Aufgreiforgan (32) in der Lage ist, kontinuierlich durch einen Motor (88) in Drehung versetzt zu werden, derart, dass ein kontinuierliches Schütteln durch vollständiges Wenden des Rohres erzeugt wird.

6. Vorrichtung nach einem der Ansprüche 1 bis 5, **dadurch gekennzeichnet, dass** der Kupplungsmechanismus (96) eine Schraube (92) und eine Mutter (94) aufweist, und in der Lage ist, durch den Motor (88) in Drehung versetzt zu werden, wahlweise in eine Richtung des Schraubens, um den beweglichen Kopf (100) von der Kassette (12) zu entfernen, oder in eine Richtung des Losschraubens, um den beweglichen Kopf (100) an die Kassette (12) heranzuführen, wobei der bewegliche Kopf an der Drehung in eine gewählte Richtung durch Blockierungseinrichtungen (132, 133), die in eine Verriegelungsposition gesetzt werden, blockiert wird.

7. Vorrichtung nach Anspruch 6, **dadurch gekennzeichnet, dass** die Blockierungseinrichtungen (132, 133) in der Lage sind, in eine Entriegelungsposition gesetzt zu werden, wenn der Kupplungsmechanismus (96) in eine Anschlagposition am Ende des Schraubens gekommen ist, was eine Drehbewegung des beweglichen Kopfes (100) ermöglicht, um das(die) Rohr(e) heftig zu bewegen.

8. Vorrichtung nach einem der Ansprüche 1 bis 7, **dadurch gekennzeichnet, dass** die Drehbewegung des beweglichen Kopfes (100) eine kontinuierliche und vollständige Drehung in Schraubrichtung des Kupplungsmechanismus (96) ist.

9. Vorrichtung nach einem der Ansprüche 1 bis 8, **dadurch gekennzeichnet, dass** sie einen Mechanismus des Öffnens und Schließens des Greiforgans (32) aufweist, der in der Lage ist, durch den Kupplungsmechanismus (96) längs bewegt zu werden, wenn einmal Letzterer in eine Anschlagposition am Ende des Losschraubens gekommen ist, wobei der bewegliche Kopf (100) durch die Blockierungseinrichtungen (132, 133) an einer Drehung gehindert ist.

10. Vorrichtung nach Anspruch 9, **dadurch gekennzeichnet, dass** das Greiforgan (32) zwei Zangenkörper (114) aufweist, von denen jedes wenigstens eine Klemmbacke (116) trägt und einen Nockenweg (120) definiert, sowie eine elastische Federeinrichtung (131) aufweist, die die beiden Zangenkörper verbindet, um die Klemmbacken aufeinander zuzudrücken, und dass der Mechanismus des Öffnens und Schließens Nockenfinger (122) aufweist, die durch den Kupplungsmechanismus (96) längs bewegt werden und jeweils mit den Nockenwegen (120) zusammenwirken.

11. Vorrichtung nach einem der Ansprüche 1 bis 10, **dadurch gekennzeichnet, dass** sie wenigstens eine manuelle Bestückungseinrichtung (82) aufweist, die in der Nähe der Übertragungseinrichtung (10) angeordnet ist, um wenigstens ein Rohr (18) aufzunehmen und dieses Rohr auf die Bahn der Übertragungseinrichtung und der Aufgreifeinrichtung zu setzen, außerhalb des Vorhandenseins der Kassette, um eine Probe durch die Entnahmeeinrichtung (34) zu entnehmen, wobei die Mittel der manuellen Bestückung (82) einen Dreh- und Schwenkkopf (142) aufweisen, der indexierte Positionen hat und Aufnahmen (144) aufweist, die in der Lage sind, Rohre unterschiedlicher Abmessungen aufzunehmen.

12. Vorrichtung nach einem der Ansprüche 1 bis 11, **dadurch gekennzeichnet, dass** die Entnahmeeinrichtung (34) einen Schlitten (146) aufweist, der den Bohrer und die Entnahmenadel (148) trägt, und der Schlitten zwischen einer Entnahmeposition, in der der Bohrer in der Lage ist, den Stopfen des Rohres zu durchbohren und die Entnahmenadel in der Lage ist, eine Gesamtprobemenge zu entnehmen, und wenigstens einer Ausgabestellung bewegbar ist, in der die Entnahmenadel in der Lage ist, die gesamte Probenmenge oder ein Teil von dieser in einen Aufnahmebehälter, wie einen Reagensbehälter auszugeben.

13. Vorrichtung nach einem der Ansprüche 1 bis 12, **dadurch gekennzeichnet, dass** sie weiterhin eine Bestückungsstelle (14) von Kassetten und eine Entladestelle (16) von Kassetten aufweist, die stromauf bzw. stromab der Übertragungseinrichtungen (10) angeordnet sind.
